## Europäisches Patentamt

## European Patent Office

## Office européen des brevets

(11) Veröffentlichungsnummer: **0 255 548**
**A1**

(12) **EUROPÄISCHE PATENTANMELDUNG**

(21) Anmeldenummer: 86110716.7

(22) Anmeldetag: 02.08.86

(51) Int. Cl.⁴: **A 47 J 37/07, A 47 J 37/04**

(43) Veröffentlichungstag der Anmeldung: 10.02.88
**Patentblatt 88/6**

(71) Anmelder: **Thiemann, Gerhard, Heerstrasse 40, D-7141 Murr (DE)**

(84) Benannte Vertragsstaaten: **AT BE CH DE FR GB IT LI LU NL SE**

(72) Erfinder: **Thiemann, Gerhard, Heerstrasse 40, D-7141 Murr (DE)**

(54) **Grillvorrichtung.**

(57) Es ist eine Grillvorrichtung vorgeschlagen, bei welcher die Heizvorrichtung aus zwei parallel zueinander angeordneten, wellenförmig verlaufenden Gittern (9, 10) besteht. Die Wendespieße (11) mit den Grillguthaltern (12) sind in der Weise angeordnet, daß beim Drehen der Wendespieße das Grillgut in die Wellentäler der Gitter (9, 10) eintaucht.

EP 0 255 548 A1

0255548

Anm.: Gerhard Thiemann
Heerstraße 40
7141 Murr

Grillvorrichtung.

Die Erfindung betrifft eine Grillvorrichtung, bestehend aus einem rechteckigen, schalenförmigen Winkelrahmen mit an dessen Stirnseiten lösbar befestigten Stirnwänden, welche am Rand mit Schlitzen zur Aufnahme von Wendespießen versehen sind, einer in der Mitte des Winkelrahmens längsparallel zu den Seitenkanten senkrecht stehende Heizvorrichtung und einer Mehrzahl von auf den Wendespieß aufsteckbaren Grillguthaltern.

Eine solche Grillvorrichtung ist bekannt (DE-OS 29 49 085). Bei dem bekannten Holzkohlengrill ist es nicht möglich, eine größere Fläche aufweisende Grillgüter, wie Koteletts oder Steaks, und kleinere Grillgüter, wie Schaschlikspieße, ohne zusätzliche Hilfsmittel auf der gleichen Grillvorrichtung zu grillen.

Es ist auch ein Holzkohlengrill mit Naben besitzenden Grillguthaltern bekannt (US-PS 2, 263, 715), bei dem an den Naben sternförmig in einer Ebene liegende und mit rechtwinklig abstehenden Spießen versehene Metallstifte befestigt sind.

Die der Erfindung zugrunde liegende Aufgabe besteht deshalb darin, eine raumsparend verpackbare und zerlegbare Grillvorrichtung zu schaffen, mit der die unterschiedlichsten Grillgüter gegrillt werden können.

Die Aufgabe ist erfindungsgemäß dadurch gelöst, daß die Heizvorrichtung aus zwei parallel zueinander angeordneten, wellenförmig verlaufenden Gittern besteht, daß die Grillguthalter eine mit einer dem Profil der Wendespieße entsprechenden Innenkontur versehene Nabe besitzen, an welcher sternförmig in einer Ebene liegende und mit rechtwinklig abstehenden Spießen versehene Metallstifte befestigt sind, und daß auf jeden Grillguthalter aufsteckbare rhombusförmige Rahmen vorgesehen sind.

Vorteilhafte Ausgestaltungen der Erfindung sind in den Ansprüchen 2 bis 4 enthalten. Sie ist nachstehend anhand eines in den Figuren 1 bis 4 verdeutlichten Ausführungsbeispieles als Holzkohlengrill näher erläutert. Es zeigen:

Fig.1    eine perspektivische Darstellung des Holzkohlengrills ohne die Wendespieße,

Fig.2    eine perspektivische Darstellung des Winkelrahmens des Holzkohlengrills mit eingesetzten
         Seitenwänden,

Fig.3    eine Draufsicht auf die Anordnung von Glutkorb und Wendespieß mit einem Grillguthalter,

Fig. 4   die Seitenansicht des Glutkorbes mit zwei
         Wendespießen,

Fig.5a   den Querschnitt des Winkelrahmens,

Fig.5b   die Draufsicht auf den Winkelrahmen

und Fig.6 die Draufsicht auf einen Grillguthalter.

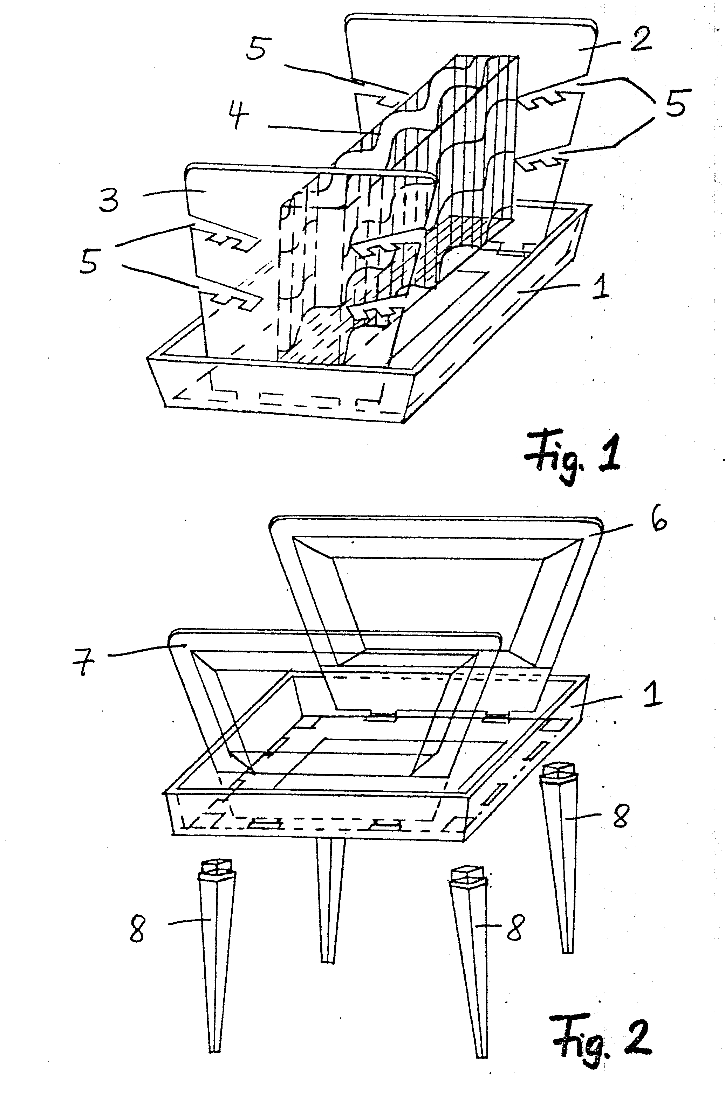

Aus Fig.1 ist der Holzkohlengrill ohne die Wendespieße zu
erkennen. Er besteht aus dem Winkelrahmen 1, den an den
Stirnseiten des Winkelrahmens lösbar befestigten Stirnwänden 2 und 3 sowie dem Glutkorb 4. Die Stirnwände 2 und 3
sind in entsprechenden Öffnungen im Winkelrahmen klemmend
gehaltert. Sie sind an ihren Rändern mit schräg verlaufenden,
in Abständen Erhöhungen aufweisenden Schlitzen 5 versehen,
in welche die-nicht gezeigten-Wendespieße drehbar eingehängt werden können. In der Mitte des Winkelrahmens 1,
zwischen den Stirnwänden 2 und 3, ist der Glutkorb 4,
stehend und ebenfalls lösbar am Winkelrahmen 1 befestigt,
angeordnet. Der Glutkorb 4 besteht aus zwei parallel
zueinander angeordneten, wellenförmig verlaufenden Gittern.

Fig.2 zeigt den gleichen Winkelrahmen 1 wie er in Fig.1
gezeigt ist, jedoch ist er um etwa 45 Winkelgrade gedreht
dargestellt und die Stirnwände 2,3 sowie der Glutkorb 4
sind der Übersichtlichkeit wegen weggelassen. Stattdessen
sind die zusätzlich zum Glutkorb 4 und den Stirnwänden 2,3
in den Winkelrahmen 1 einsetzbaren schalenförmigen Seitenwände 6 und 7 gezeigt. Diese Seitenwände 6,7 haben
mehrere vorteilhafte Eigenschaften. Im eingesetzten Zustand
sind die während des Grillens dazu geeignet, die Strahlungswärme auf das Grillgut zu konzentrieren. Darüberhinaus
sind die schalenförmigen Seitenwände 6,7 auch dazu geeignet,
das rohe, noch nicht gegrillte Fleisch während des
Transportes aufzunehmen oder als

Servierplatte für das fertige Grillgut zu dienen. In Fig.2 ist außerdem angedeutet, daß dem Winkelrahmen 1 ein stabiler Stand dadurch verliehen werden kann, daß Beine 8 in entsprechende Öffnungen des Winkelrahmens einsetzbar und dort arretierbar sind.

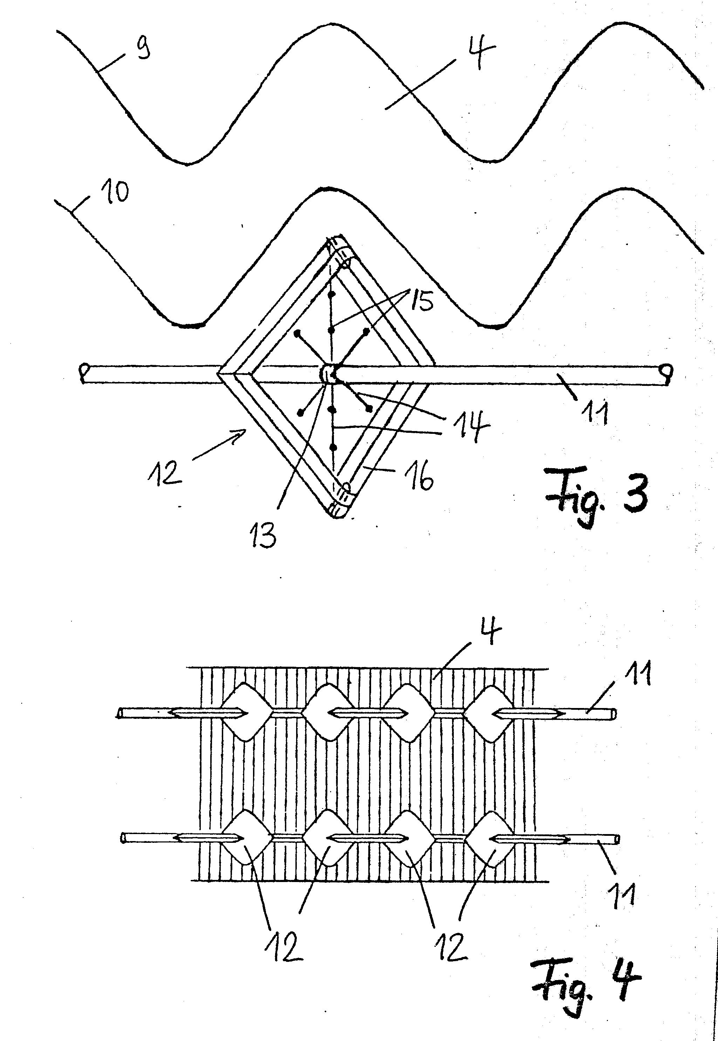

Fig.3 verdeutlicht die Ausgestaltung der Grillguthalter, ihre Anordnung auf dem Wendespieß und ihre Zuordnung zum Glutkorb. Sie entspricht etwa einem Längsschnitt durch den Holzkohlengrill gemäß Fig.1 mit einem Wendespieß und einem Grillguthalter. In der Draufsicht auf den Glutkorb 4 sind dessen wellenförmigen Gitter 9 und 10 zu erkennen. Parallel zur Längsachse des Glutkorbes 4 ist der Wendespieß 11 angeordnet, auf dem eine Mehrzahl von Grillguthaltern 12 aufsteckbar ist, von denen in Fig.3 jedoch nur einer gezeigt ist. Jeder Grillguthalter 12 besteht aus einer Nabe 13, an welcher eine Mehrzahl von in einer Ebene liegenden Metallstiften befestigt ist, welche - teils an ihren Enden, teils auf ihrer Längserstreckung verteilt - mit rechtwinklig zu den Metallstiften 14 angeordneten Spießen 15 versehen sind. Ein in der Diagonale liegender Metallstift ist länger als die übrigen Metallstifte ausgebildet und an seinen Enden als Halter, z.B. als abgewinkelter Haken, ausgebildet. Auf diese Enden des längeren Metallstiftes ist ein rhombusförmiger, aus einem Blechstreifen gebildeter Rahmen 16 aufgesteckt und somit lösbar befestigt. Der Rahmen 16 liegt in der gleichen Ebene wie das von

-8-

den Metallstiften 14 gebildete Netzwerk.

Die Öffnung, in welcher der Wendespieß 11 die Nabe 13 durchdringt, ist derart schräg angeordnet, daß zwischen der Ebene der Metallstifte 14 und der Längsachse des Wendespießes 11 ein spitzer Winkel vorhanden ist. Die den Spieß aufnehmende Öffnung in der Nabe 13 ist derart gestaltet, daß der Grillguthalter 12 zwar auf dem Wendespieß längsverschiebbar, jedoch drehfest mit ihm verbunden ist. Auf den Spießen 15 können sowohl kleine als auch große flächenhafte Fleischstücke aufgespießt werden. Da die Grillguthalter 12 in den vom Glutkorb 4 gebildeten Nischen angeordnet sind, so daß die Strahlungswärme des Holzkohlenfeuers besonders gut genutzt werden kann, dient der Rahmen 16 dazu um die besonders gefährdeten Kanten des Grillgutes abzuschirmen und vor einer Überhitzung zu schützen.

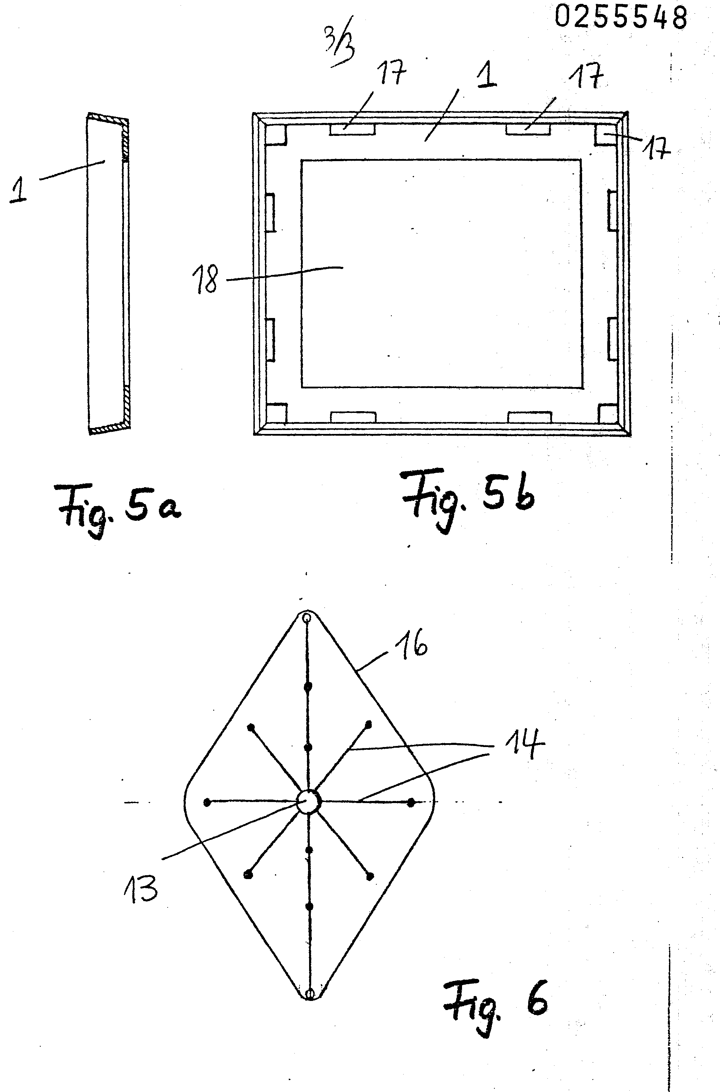

Fig.4 verdeutlicht in einer Seitenansicht den Glutkorb 4 eines Holzkohlengrills mit zwei Wendespießen 11 und einer Mehrzahl auf diesen aufgesteckten Grillguthaltern 12.

Aus den Figuren 5a und 5b sind noch Einzelheiten des Winkel- rahmens 1 zu erkennen. Aus Fig.5b sind besonders gut die am Rand vorhandenen Öffnungen 17 erkennbar, welche - wie bereits erwähnt - zur Aufnahme der Stirnwände 2,3, der Seitenwände 6,7 und der Ebene 8 vorgesehen sind. Außerdem wird aus den Figuren 5a und 5b

7

deutlich, daß der Winkelrahmen 1 im Zentrum eine größere
Öffnung 18 aufweist. In sie kann beispielsweise ein
passendes - nicht gezeigtes - Bodenblech eingelegt werden.

Fig.6 verdeutlicht nochmals Einzelheiten des im Zusammenhang mit Fig.3 bereits beschriebenen Grillguthalters 12.

Die Erfindung ist vorstehend anhand eines Holzkohlengrills
beschrieben. Anstatt die Heizvorrichtung als Glutkorb
auszubilden, kann zwischen den Gittern 9 und 10 auch eine
mit einer anderen Heizenergie beheizte Heizvorrichtung,
wie eine elektrisch oder durch Gas beheizte Heizvorrichtung,
vorhanden sein.

Bezugszeichenliste

1 Winkelrahmen

2 Stirnwand

3 Stirnwand

4 Glutkorb

5 Schlitz

6 Seitenwände

7 Seitenwände

8 Bein

9 Gitter

10 Gitter

11 Wendespieß

12 Grillguthalter

13 Nabe

14 Metallstift

15 Spieß

16 Rahmen

17 Öffnung

18 Öffnung

Patentansprüche

1. Grillvorrichtung, bestehend aus einem rechteckigen, schalenförmigen Winkelrahmen mit an dessen Stirnseiten lösbar befestigten Stirnwänden, welche am Rand mit Schlitzen zur Aufnahme von Wendespießen versehen sind, einer in der Mitte des Winkelrahmens längsparallel zu den Seitenkanten senkrecht stehenden Heizvorrichtung und einer Mehrzahl von auf den Wendespieß aufsteckbaren Grillguthaltern, dadurch gekennzeichnet, daß die Heizvorrichtung (4) aus zwei parallel zueinander angeordneten, wellenförmig verlaufenden Gittern (9,10) besteht, daß die Grillguthalter (12) eine mit einer dem Profil der Wendespieße (11) entsprechenden Innenkontur versehene Nabe (13) besitzen, an welcher sternförmig in einer Ebene liegende und mit rechtwinklig abstehenden Spießen (15) versehene Metallstifte (14) befestigt sind, und daß auf jeden Grillguthalter (12) aufsteckbare rhombusförmige Rahmen (16) vorgesehen sind.

Murr, den 01.08.86

0255548

2. Grillvorrichtung nach Anspruch 1, dadurch gekennzeichnet, daß an den Längsseiten des Winkelrahmens (1)
schalenförmige Seitenwände (6,7) lösbar befestigt
sind.

3. Grillvorrichtung nach den Ansprüchen 1 und 2,
dadurch gekennzeichnet, daß die Innenkontur derart
in der Nabe (13) angeordnet ist, daß ihre Längsachse
mit der Ebene der Metallstifte (14) einen spitzen
Winkel einschließt.

4. Grillvorrichtung nach den Ansprüchen 1 bis 3,
dadurch gekennzeichnet, daß der Rahmen (16) aus
einem bandförmigen Streifen eines wärmebeständigen
Metalls besteht.

**Fig. 1**

**Fig. 2**

Fig. 3

Fig. 4

0255548

17    1    17

17

18

Fig. 5a

Fig. 5b

16

14

13

Fig. 6

0255548

**EUROPÄISCHER RECHERCHENBERICHT**

Nummer der Anmeldung

EP 86 11 0716

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | DE-A-2 949 085 (HONSEL-WERKE) | | A 47 J 37/07<br>A 47 J 37/04 |
| D,A | US-A-2 263 715 (BOBO) | | |
| A | FR-A- 426 139 (ACHARD) | | |
| A | US-A-2 545 818 (LARKIN) | | |
| A | US-A-1 568 535 (SCHEY) | | |
| A | AU-B- 539 069 (SICH) | | |
| A | US-A-3 946 653 (PUGH) | | |
| A | US-A-3 342 122 (BLINN) | | |
| A | CH-A- 377 505 (BONDANINI) | | |
| | --- -/- | | |

RECHERCHIERTE
SACHGEBIETE (Int. Cl.4)

A 47 J

Der vorliegende Recherchenbericht wurde für alle Patentansprüche erstellt.

| Recherchenort | Abschlußdatum der Recherche | Prüfer |
|---|---|---|
| DEN HAAG | 07-04-1986 | SCHARTZ J. |

# EUROPÄISCHER RECHERCHENBERICHT

Europäisches
Patentamt

| | EINSCHLÄGIGE DOKUMENTE | | Seite 2 |
| :---: | :---: | :---: | :---: |
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| A | US-A-3 190 211 (TICOIAN) | | |

----

**RECHERCHIERTE SACHGEBIETE (Int. Cl.4)**

Der vorliegende Recherchenbericht wurde für alle Patentansprüche erstellt.

| Recherchenort | Abschlußdatum der Recherche | Prüfer |
| :---: | :---: | :---: |
| DEN HAAG | 07-04-1986 | SCHARTZ J. |

KATEGORIE DER GENANNTEN DOKUMENTE
X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82